## Europäisches Patentamt

## European Patent Office

## Office européen des brevets

(19)

(11) Veröffentlichungsnummer: **0 037 849**
**B1**

(12) **EUROPÄISCHE PATENTSCHRIFT**

(45) Veröffentlichungstag der Patentschrift:
**11.01.84**

(51) Int. Cl.³: **F 16 D 1/08**

(21) Anmeldenummer: **80105315.8**

(22) Anmeldetag: **05.09.80**

(54) **Spannsatz in Doppelausführung zur Nabenbefestigung.**

(30) Priorität: **10.04.80 DE 3013874**

(43) Veröffentlichungstag der Anmeldung:
**21.10.81 Patentblatt 81/42**

(45) Bekanntmachung des Hinweises auf die Patenterteilung:
**11.01.84 Patentblatt 84/2**

(84) Benannte Vertragsstaaten:
**FR GB IT**

(56) Entgegenhaltungen:
**DE - A - 2 808 696**
**DE - B - 2 147 501**
**DE - C - 1 099 806**

(73) Patentinhaber: **Peter, Oskar E., Schloss-Strasse 9/1,
D-7129 Brackenheim (DE)**

(72) Erfinder: **Peter, Oskar E., Schloss-Strasse 9/1,
D-7129 Brackenheim (DE)**

(74) Vertreter: **Patentanwälte Dipl.-Ing. W. Scherrmann
Dr.-Ing. R. Rüger, Webergasse 3 Postfach 348,
D-7300 Esslingen (Neckar) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Spannsatz in Doppelausführung zur Nabenbefestigung

Die Erfindung bezieht sich auf einen Spannsatz in Doppelausführung zur Nabenbefestigung, bestehend aus je einem geschlitzten Innen- und Außenspannring mit entgegengesetzten Außen- bzw. Innenkegelflächen, die durch beidseitig konzentrisch eingesetzte doppelkegelige Druckringe mit korrespondierenden Kegelflächen mittels planetarisch angeordneten Innensechskantspannschrauben, die den einen doppelkegeligen Druckring in Bohrungen und den gegenüberliegenden doppelkegeligen Druckring in Gewindebohrungen durchdringen, gegenläufig axial beaufschlagt werden und spannbar sind. Spannsätze der obengenannten Art sind bekannt (DE-C-1 099 806). Diese Spannsätze besitzen gegenüber anderen Spannsätzen den Vorteil, daß eine Verschiebung des Innen- und Außenspannrings auf der Welle und in der Nabenbohrung während des Spannvorganges nicht eintritt, wodurch eine genaue Ausrichtung und winkelgenaue Feineinstellung des Nabenkörpers zur Welle möglich ist. Dadurch, daß zwischen Welle, Spannsatz und der Nabe beim Spannen keine Verschiebungen eintreten, ist eine Verringerung der Reibkräfte gegeben, da diese nur innerhalb des Spannsatzes zwischen den kegeligen Spannringen und der in Funktionsberührung stehenden doppelkegeligen Druckringen wirken. Je Spannsatzseite ist nur ein Reibungswiderstand zu überwinden. Die Winkel der kegeligen Spannringe mit den doppelkegeligen Druckringen liegen über der Selbsthemmung, so daß ein selbsttätiges Lösen des Spannsatzes nach Aufhebung der axialen Spannkraft gegeben ist.

Der bekannte Spannsatz, der sich unter der Bezeichnung Ringfeder-Spannsatz im In- und Ausland gut bewährt hat, besitzt den Nachteil, daß er nur zu einer Nabenbefestigungsart, eingesetzt zwischen einer Welle und einer Nabe, Verwendung finden kann. Für andere Nabenbefestigungsarten, z. B., wenn er in einer Hohlwelle oder in einer zylindrischen Sackbohrung der Welle angeordnet ist und die aufgeschobene Nabe spannt, ist der Ringfeder-Spannsatz nicht verwendbar, da der geschlitzte, dünnwandige kegelige Innenspannring die beim Spannvorgang auftretenden radialen Druckkräfte nicht aufnehmen kann. Das gleiche gilt für die Nabenbefestigungsart, bei welcher der Spannsatz auf einem Hals der Nabe sitzt und diese mittels einer Schrumpfspannung auf der Welle befestigt ist. Die hier beim Spannvorgang auftretenden radialen Zugkräfte können durch den geschlitzten, dünnwandigen, kegeligen Außenspannring nicht aufgenommen werden. Hieraus resultiert, daß bisher für die drei genannten Nabenbefestigungsarten drei verschiedene Sonderspannsätze hergestellt werden müssen, was aufwendig, teuer und volkswirtschaftlich nicht vertretbar ist (DE-C-1 099 806, DE-C-2 147 501, DE-C-1 294 751). Ferner ist für jede der drei Spannsatzarten eine kostenaufwendige Lagerhaltung erforderlich.

Der Erfindung liegt die Aufgabe zugrunde, einen einheitlichen Universal-Spannsatz zu schaffen, der im Aufbau einfach ist und für die drei verschiedenen Nabenbefestigungsarten Verwendung finden kann.

Erfindungsgemäß wird die Aufgabe dadurch gelöst, daß je nach Art der Nabenbefestigung entweder in den geschlitzten Innenspannring mit entgegengesetzten Außenkegelflächen eine geschlossene, zylindrische Metallbuchse eingesetzt ist oder auf den geschlitzten Außenspannring mit entgegengesetzten Innenkegelflächen des Spannsatzes eine geschlossene, zylindrische Metallbuchse aufgesetzt ist, wobei die Metallbuchse für den geschlitzten Innenspannring eine äußere umlaufende U-förmige Nut und die Metallbuchse für den geschlitzten Außenspannring eine innere umlaufende U-förmige Nut aufweist zur Halterung der Metallbuchsen an den Spannringen.

Mit den Mitteln der Erfindung steht nunmehr ein einheitlicher Universal-Spannsatz in Doppelausführung zur Verfügung, der in vorteilhafter Weise die drei genannten verschiedenen Nabenbefestigungsarten mit einer Welle kraftschlüssig spannt zur Durchleitung von Drehmomenten. Durch die Erfindung kann nunmehr der Universal-Spannsatz von der kleinsten bis zur größten Abmessung preiswert in Großserien hergestellt werden, was für den Export von ausschlaggebender Bedeutung ist. Auch die Vorrats- und Lagerhaltung ist einfach und wirkt sich kostensenkend aus.

In der Zeichnung sind Ausführungsbeispiele des Universalspannsatzes in Doppelausführung dargestellt. Es zeigt

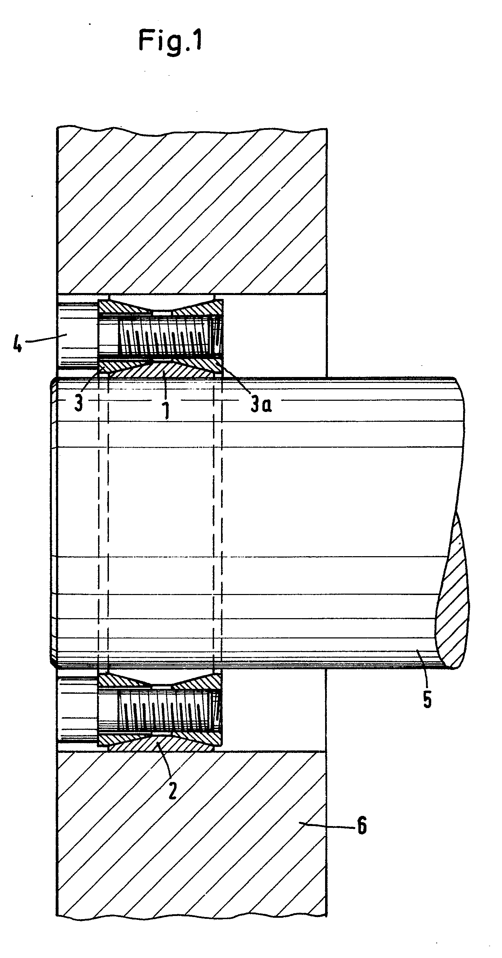

Fig. 1 den Spannsatz, von dem die Erfindung ausgeht, also in bekannter Ausführung — als einheitliches Spannorgan — mit den zwischen den geschlitzten kegeligen Spannringen beidseitig eingesetzten doppelkegeligen Druckringen mit durchgeführten planetenartigen Innensechskantspannschrauben, eingesetzt zwischen einer Welle und einer Nabe im Axialschnitt,

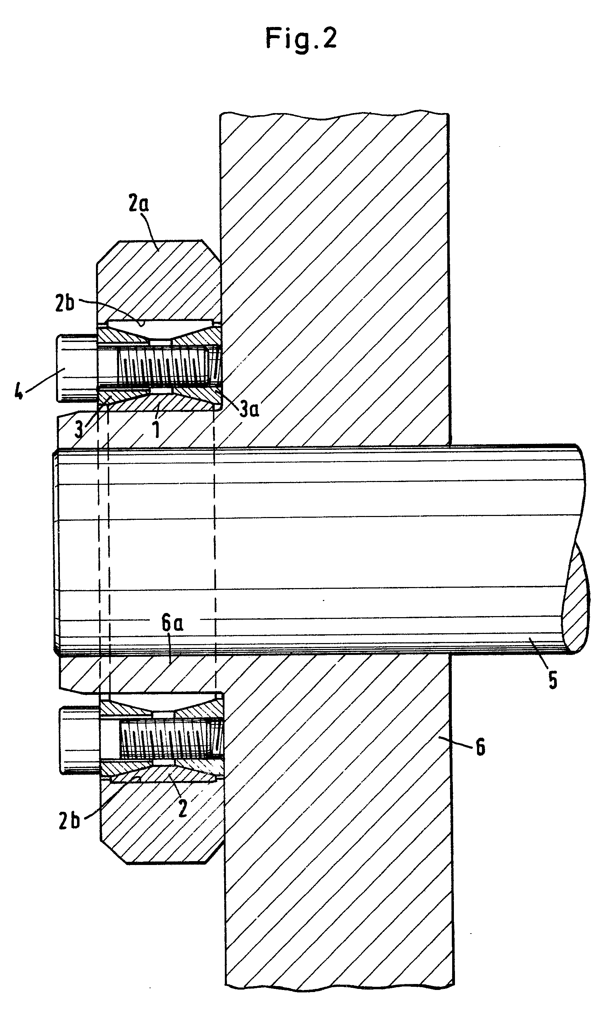

Fig. 2 eine erfindungsgemäße Weiterbildung des bekannten Spannsatzes gemäß Fig. 1, bei dem auf dem geschlitzten kegeligen Außenspannring eine gehalterte, geschlossene Metallbuchse aufgesetzt ist, wobei der Spannsatz auf dem Hals einer Nabe angeordnet ist in Kraftschlußverbindung mit einer Welle in einem Axialschnitt und

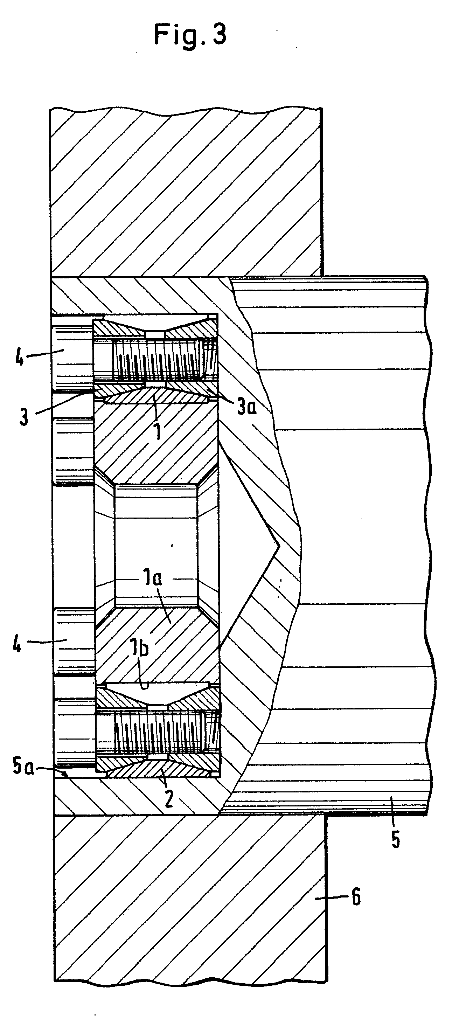

Fig. 3 eine andere erfindungsgemäße Weiterbildung des Spannsatzes nach Fig. 1, bei dem der geschlitzte kegelige Innenspannring eine gehalterte, geschlossene zylindrische Metallbuchse aufweist, eingesetzt in einer Sackbohrung der Welle mit aufgeschobener Nabe im Axialschnitt.

Der bekannte Spannsatz nach Fig. 1 besteht aus einem längsgeschlitzten Innenspannring 1 mit entgegengesetzten Außenkegelflächen und dem mit radialem Abstand angeordneten längsgeschlitzten Außenspannring 2 mit entgegengesetzten Innenkegelflächen. Zwischen den Spannringen 1, 2 sind beidseitig konzentrisch doppelkegelige Druckringe 3, 3a eingesetzt. Durch planetenartig angeordnete Innensechskantspannschrauben 4, die den Druckring 3 in Durchgangsbohrungen, den Druckring 3a in Gewindebohrungen durchdringen, wird der Spannsatz zu einer einbaufertigen Einheit zusammengehalten und ist spannbar. Der Spannsatz sitzt zwischen einer Welle 5 und einer Nabe 6.

Der Spannsatz nach dem Ausführungsbeispiel gemäß Fig. 2 weist die gleichen Bestandteile auf wie derjenige nach Fig. 1, und diese tragen auch die gleichen Bezugszeichen, wobei jedoch auf den längsgeschlitzten kegeligen Außenspannring 2 eine geschlossene zylindrische Metallbuchse 2a, vorzugsweise aus einem Werkstoff mit hoher Streckgrenze, mit einer umlaufenden U-förmigen Nut 2b aufgesetzt ist zur Halterung mit dem längsgeschlitzten kegeligen Außenspannring 2. Der Universal-Spannsatz 1, 2, 3, 3a, 4 mit der Metallbuchse 2a sitzt auf dem Hals 6a der Nabe 6 in Kraftschlußverbindung mit der Welle 5.

Der Spannsatz nach dem Ausführungsbeispiel gemäß Fig. 3 weist ebenfalls die gleichen Bestandteile auf wie derjenige nach Fig. 1, und diese tragen auch die gleichen Bezugszeichen, jedoch ist hier in dem längsgeschlitzten kegeligen Innenspannring 1 eine gehalterte geschlossene Metallbuchse 1a mit einer umlaufenden Nut 1b eingesetzt zur Aufnahme der beim Spannvorgang auftretenden radialen Druckkräfte. Der Universal-Spannsatz 1, 2, 3, 3a, 4 mit der gehalterten Metallbuchse 1a ist in einer Sackbohrung 5a der Welle 5 angeordnet, wobei die Welle 5 in Kraftschlußverbindung mit einer aufgeschobenen Nabe 6 steht und mittels des Universal-Spannsatzes gespannt werden kann zur Durchleitung von Drehmomenten.

Die Arbeitsweise des Spannsatzes in Doppelausführung nach Fig. 1 ist folgende: Beim Anziehen der planetenartig angeordneten Innensechskantspannschrauben 4 werden die doppelkegeligen Druckringe 3, 3a gegenläufig bewegt, wodurch der geschlitzte kegelige Innenspannring 1 mit Radialpressung auf die Welle 5 und der geschlitzte kegelige Außenspannring 2 radial an die Bohrung der Nabe 6 gespannt wird zur Übertragung beachtlicher Drehmomente, resultierend aus der erzeugten axialen Spannkraft der Innensechskantspannschrauben 4. Beim Lösen der Innensechskantspannschrauben 4 wird die Klemmwirkung der kegeligen Spannringe 1, 2 aufgehoben, und der Spannsatz kann von der Welle 5 entfernt werden.

## Patentanspruch

Spannsatz in Doppelausführung zur Nabenbefestigung, bestehend aus je einem geschlitzten Innen- und Außenspannring (1, 2) mit entgegengesetzten Außen- bzw. Innenkegelflächen, die durch beidseitig konzentrisch eingesetzte doppelkegelige Druckringe (3, 3a) mit korrespondierenden Kegelflächen mittels planetarisch angeordneten Innensechskantspannschrauben (4), die den einen doppelkegeligen Druckring (3) in Bohrungen und den gegenüberliegenden doppelkegeligen Druckring (3a) in Gewindebohrungen durchdringen, gegenläufig axial beaufschlagt werden und spannbar sind, dadurch gekennzeichnet, daß je nach Art der Nabenbefestigung entweder in den geschlitzten Innenspannring (1) mit entgegengesetzten Außenkegelflächen eine geschlossene, zylindrische Metallbuchse (1a) eingesetzt ist oder auf den geschlitzten Außenspannring (2) mit entgegengesetzten Innenkegelflächen des Spannsatzes eine geschlossene, zylindrische Metallbuchse (2a) aufgesetzt ist, wobei die Metallbuchse (1a) für den Innenspannring (1) eine äußere umlaufende U-förmige Nut (1b) und die Metallbuchse (2a) für den Außenspannring (2) eine innere umlaufende Nut (2b) aufweist, zur Halterung der Metallbuchsen (1a, 2a) an den Spannringen (1, 2).

## Claim

A double-type hub clamping fixture comprising one slotted inner and outer clamping ring (1, 2) each with opposite outer and/or inner conical surfaces which are subjected in opposite axial directions to the action of, and can be clamped by, double-conical pressure rings (3, 3a) with matching conical surfaces, by means of internal hexagon clamping screws (4) provided in planetary arrangement and passed through holes in the double-conical pressure rings (3) and through threaded bores in the opposite double-conical pressure ring (3a), characterized in that depending on the manner in which the hub is mounted a closed cylindrical metal bushing (1a) is inserted into the slotted inner clamping ring (1) with opposite outer conical surfaces, or a closed cylindrical metal bushing (2a) is placed upon the slotted outer clamping ring (2) of the clamping fixture with opposite inner conical surfaces, the metal bushing (1a) for the inner clamping ring (1) being provided with an outer U-shaped groove (1b) extending around its periphery, and the metal bushing (2a) for the outer clamping ring (2) being provided with an inner groove (2b) extending around its circumference, for holding the metal bushings (1a, 2a) on the clamping rings (1, 2).

## Revendication

Dispositif de serrage pour le montage des moyeux, constitué par un anneau de serrage interne et un anneau de serrage externe (1, 2) respectivement fendus qui comportent des surfaces coniques extérieures et intérieures opposées et qui, par l'intermédiaire de cônes d'écartement biconiques (3, 3a) engagés concentriquement des deux côtés et munis de surfaces coniques correspondantes, peuvent être soumis à l'action de forces axiales agissant en sens contraire et serrés au moyen de vis à six pans creux (4) disposées planétairement et traversant l'un des cônes d'écartement biconiques (3) par des perçages et le cône d'écartement biconique opposé (3a) par des taraudages, caractérisé par le fait que, selon le mode de fixation du moyeu, soit on insère une douille métallique cylindrique fermée (1a) dans l'anneau de serrage interne fendu (1) à surfaces coniques extérieures opposées, soit on applique une douille métallique cylindrique fermée (2a) sur l'anneau de serrage externe fendu (2) à surfaces coniques intérieures opposées, la douille métallique (1a) comportant pour l'anneau de serrage interne (1) une gorge annulaire extérieure (1b) en forme d'U et la douille métallique (2a) pour l'anneau de serrage externe (2) une gorge annulaire interne (2b) pour la fixation des douilles métalliques (1a, 2a) sur les anneaux de serrage (1, 2).

# Fig.1

# Fig.2

# Fig. 3